(19) Europäisches Patentamt
European Patent Office
Office européen des brevets

(11) Veröffentlichungsnummer: **0 178 292**
**B1**

(12) # EUROPÄISCHE PATENTSCHRIFT

(45) Veröffentlichungstag der Patentschrift: **14.06.89**

(51) Int. Cl.⁴: **C 08 B 15/06**

(21) Anmeldenummer: **85890246.3**

(22) Anmeldetag: **07.10.85**

(54) **Verfahren zur Herstellung von Cellulosecarbamaten.**

(30) Priorität: **09.10.84 AT 3200/84**

(43) Veröffentlichungstag der Anmeldung: **16.04.86 Patentblatt 86/16**

(45) Bekanntmachung des Hinweises auf die Patenterteilung: **14.06.89 Patentblatt 89/24**

(84) Benannte Vertragsstaaten: **DE FR GB IT SE**

(56) Entgegenhaltungen: **US-A- 2 134 825**

(73) Patentinhaber: **Lenzing Aktiengesellschaft, A-4860 Lenzing (AT)**

(72) Erfinder: **Griesser, Herbert, Dr., Stadtplatz 22a, A-4840 Vöcklabruck (AT)**
Erfinder: **Jeszenszky, Thomas, Dipl. Chem. Ing., Hauptstrasse 28, A-4862 Kammer (AT)**
Erfinder: **Weinrotter, Klaus, Dr., Edisonstrasse 3, A-4840 Vöcklabruck (AT)**
Erfinder: **Jurkowitsch, Raimund, Hauptstrasse 27, A-4860 Lenzing (AT)**

(74) Vertreter: **Wolfram, Gustav, Dipl.-Ing., Schwindgasse 7 P.O. Box 205, A-1041 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 178 292 B1

**Beschreibung**

Die Erfindung betrifft ein Verfahren zur Herstellung von Cellulosecarbamaten durch Imprägnieren von cellulosehältigem Material mit einer wässerigen, Alkalimetallhydroxid und Harnstoff enthaltenden Lösung, Erhitzen des imprägnierten cellulosehältigen Materials zur Bildung der Cellulosecarbamate sowie Abtrennen von nicht umgesetztem Harnstoff und Nebenprodukten.

Als cellulosehältiges Material kommen beispielsweise Zellstoffe verschiedener Provenienz, Baumwolle und ähnliche Ausgangsstoffe in Frage.

Cellulosecarbamate, bei denen je nach dem Durchschnittssubstitutionsgrad (DS) eine oder mehrere Hydroxylfunktionen pro Anhydroglucoseeinheit der Celluloseketten in statistischer Verteilung durch Carbamatgruppen ersetzt sind, lösen sich in kalten, wässerigen Basen. So erhaltene Lösungen rücken gegenwärtig beispielsweise als Spinnlösungen zur Herstellung cellulosischer Chemiefasern in den Brennpunkt des Interesses.

Die derzeitige Welterzeugung an cellulosischen Chemiefasern erfolgt fast ausschliesslich nach dem Viskoseverfahren. Ein geringer Anteil wird noch nach dem Kupferoxid-Ammoniakverfahren hergestellt, das aber wegen seiner Beschränkung auf feine Titer und seiner Abwasserbelastung durch Schwermetallsalze immer weiter verdrängt wird.

Eine umfassende Darstellung über die nach dem Viskoseverfahren herstellbaren Fasertypen und die verschiedenen Verfahrensparameter findet sich in Götze, Chemiefasern nach dem Viskoseverfahren, 3. Auflage 1967, Springer-Verlag.

Das Viskoseverfahren hat aber schwerwiegende Nachteile. So sind zur Herstellung der Spinnlösung sehr viele aufwendige und zeitraubende Verfahrensstufen notwendig; der einzusetzende Schwefelkohlenstoff ist hochgiftig, leicht entzündlich und explosiv. Darüber hinaus ist er nur schwer rückgewinnbar, da er in den Regenerationsbädern sehr verdünnt vorliegt. Ein Teil des im Cellulosenatriumxanthogenat gebundenen Schwefelkohlenstoffes zersetzt sich zu Schwefelwasserstoff, welcher gleichfalls stark toxisch und explosiv ist.

Es hat daher nicht an Versuchen gefehlt, den Viskoseprozess durch ein billigeres, umweltfreundlicheres Verfahren zu ersetzen. Hier sind einerseits Verfahren, bei denen Cellulose direkt in einem Lösungsmittel oder einem Lösungsmittelgemisch gelöst wird, und andererseits solche, bei denen die Cellulose vor oder während des Löseprozesses zu einem Derivat umgesetzt wird, zu nennen.

Aus der US-A 2 134 825 sind Verfahren zur Herstellung von gegebenenfalls N-substituierten Cellulosecarbamaten bekannt geworden, u.a. auch ein Verfahren der eingangs definierten Art, wobei allerdings Natriumhydroxid in den wässerigen Imprägnierlösungen nur in einem Konzentrationsbereich von 2 bis 10% eingesetzt wird. Imprägnierlösungen mit einem geringeren oder höheren Gehalt an NaOH werden als ungeeignet bezeichnet.

Beim Erhitzen des imprägnierten cellulosehältigen Materials auf Temperaturen nahe oder über dem Schmelzpunkt des Harnstoffes (132,7°C) findet allmähliche Zersetzung des Harnstoffes zu Isocyansäure und Ammoniak nach der Gleichung

$$H_2N-\overset{\overset{\displaystyle O}{\|}}{C}-NH_2 \rightarrow HNCO + NH_3 \qquad (I)$$

statt.

Die Isocyansäure ist sehr reaktiv und bildet mit den Hydroxygruppen von Cellulose Carbamate entsprechend folgender Umsetzung:

$$HNCO + Cell{-}OH \rightarrow Cell{-}O{-}\overset{\overset{\displaystyle O}{\|}}{C}-NH_2 \qquad (II).$$

Weiter können Nebenreaktionen auftreten, wie die Umsetzung von Harnstoff und Isocyansäure zu Biuret oder die Bildung von Cyanursäure und anderen Polymerisationsprodukten der Isocyansäure.

Bei der Carbamatbildung mit Cellulose findet eine heterogene Reaktion statt, wofür es wesentlich ist, dass der Harnstoff vor dem Erhitzen der imprägnierten Cellulose möglichst gleichmässig zwischen den Fasermolekülen der Cellulose verteilt vorliegt. Nehmen die inneren bzw. kristallinen Bereiche der Cellulosefasern nicht oder nur in vermindertem Ausmass an der Carbamatbildung teil, sind diese Faserbereiche nicht in kalten, wässrigen Basen löslich und das Ergebnis sind unfiltrierbare, technisch nicht verwertbare – insbesondere nicht verspinnbare – Lösungen mit vielen Faserresten.

Der eigentliche Reaktionspartner der Cellulose – die beim Erhitzen entstehende Isocyansäure – ist so instabil, dass sie nicht selbst in die Fasern diffundieren kann, da sie sofort unter Bildung der erwähnten Nebenprodukte weiterreagiert. Zur Erzielung einer gleichmässigen Verteilung des Harnstoffes ist das in der wässerigen Imprägnierlösung enthaltene Alkalimetallhydroxid verantwortlich. Alkalimetallhydroxide sind in grossen Mengen verfügbare, verhältnismässig preisgünstige und sehr gute Quellmittel für Cellulose. Die Imprägnierlösung trägt das Vorprodukt Harnstoff mit dem Quellvorgang in alle Faserbereiche.

Bei dem Verfahren nach der US-A 2 134 825 verbleibt in der imprägnierten Cellulose nach Verdampfen des Wassers neben Harnstoff auch festes Alkalimetallhydroxid, welches den bis zu einem gewissen Ausmass erwünschten, mit einer Verringerung des Durchschnittspolymerisationsgrades (DP) verbundenen Abbau der Cellulose stark vorantreibt. Gerade bei Imprägnierung mit Lösungen, welche mehr als 10% Alkalimetallhydroxid enthalten und eine besonders gute Quellwirkung ausüben, schreitet dieser Abbau derart rasch fort, dass die nach Regeneration der Cellu-

lose erhaltenen Produkte, wie Fasern und Filme, keine akzeptablen Gebrauchseigenschaften mehr aufweisen.

Andererseits wird durch Imprägnierungslösungen mit Hydroxidkonzentrationen zwischen etwa 5 und 8 Massen% nur eine unzureichende Quellung bewirkt, so dass die Cellulose in den kristallinen Bereichen nicht ausreichend substituiert wird und die bereits dargelegten Schwierigkeiten beim Lösen der erhaltenen, zusätzlich noch stark bräunlich verfärbten Produkte in verdünnten wässrigen Basen auftreten.

Zudem fördert die Anwesenheit von Alkalimetallhydroxid beim Erhitzen der imprägnierten Cellulose die Nebenreaktionsneigung der entstehenden Isocyansäure, wodurch ein grosser Teil des Harnstoffes für die Umsetzung mit den Hydroxylgruppen der Cellulose verloren geht und sich der Substitutionsgrad der Cellulose somit erheblich verringert.

Die Erfindung stellt sich die Aufgabe, die dargelegten Schwierigkeiten bei der Herstellung von Cellulosecarbamaten zu überwinden und ein Verfahren der eingangs erwähnten Art zu schaffen, bei dem jedoch nur vernachlässigbare Alkalimetallhydroxid- und Harnstoffverluste auftreten, sowie im wesentlich unverfärbte Produkte, welche nicht zu stark abgebaut sind und welche in allen Bereichen ausreichend mit Carbamatgruppen substituiert sind, erhalten werden.

Die gestellte Aufgabe wird erfindungsgemäss dadurch gelöst, dass das mit Alkalimetallhydroxid und Harnstoff imprägnierte Material vor dem Erhitzen ein- oder mehrmals mit harnstoffhältigem Wasser ausgewaschen wird.

Die bisher bestehenden Nachteile bei der Cellulosecarbamatsynthese mit Harnstoff und Alkalimetallhydroxid werden auf diese Weise ohne aufwendige Massnahmen betriebssicher beseitigt.

Zweckmässig wird zum Auswaschen eine wässerige Harnstofflösung eingesetzt, die 10 bis 25 Massen% Harnstoff enthält.

Die Konzentration der wässerigen Waschflüssigkeit an Harnstoff kann kleiner, gleich oder grösser sein als in der Imprägnierflüssigkeit, es ist nur wesentlich, dass der Harnstoff nicht wieder aus den kristallinen Bereichen der Cellulose entfernt wird. Durch Änderung der Konzentration an Harnstoff in der Waschflüssigkeit kann ein bestimmtes Verhältnis der Harnstoffmenge in den schwer zugänglichen zu der Harnstoffmenge in den leicht zugänglichen Bereichen eingestellt werden.

Der Alkalimetallhydroxidgehalt des imprägnierten Materials muss jedoch beim Waschprozess auf einen Wert herabgesetzt werden, der beim Erhitzen nicht mehr schädlich ist. Auch die Waschflüssigkeit kann einen gewissen Gehalt an Alkalimetallhydroxid aufweisen, welcher aber jedenfalls geringer sein muss als jener in der Imprägnierlösung. Das Auswaschen kann in mehreren Stufen mit abnehmender Konzentration an Alkalimetallhydroxid in der harnstoffhältigen Waschflüssigkeit erfolgen.

Vorteilhaft wird das Auswaschen des imprägnierten Materials bis zu einem Alkalimetallhydroxidgehalt von höchstens 2 Massen%, vorzugsweise höchstens 0,5 Massen% – bezogen auf das getrocknete, imprägnierte Material –, durchgeführt, wobei der Waschprozess absatzweise oder kontinuierlich vorgenommen werden kann.

Zum Imprägnieren des cellulosehältigen Materials wird vorzugsweise eine Lösung eingesetzt, welche mehr als 10 und bis 30 Massen%, insbesondere 11 bis 12 Massen% Alkalimetallhydroxid, besonders zweckmässig Natriumhydroxid, enthält.

Bei einer Laugenkonzentration von 11 bis 12 Massen% wird die maximale Quellwirkung auf Cellulose ausgeübt.

Imprägnieren und Waschen kann im kontinuierlichen Betrieb beispielsweise so durchgeführt werden, dass das Ersetzen der Imprägnierlösung durch die Waschflüssigkeit

- in mindestens einer Waschzone einer kontinuierlich arbeitenden Zentrifuge,
- auf mindestens einer Waschzone eines Siebbandfilters,
- in mindestens einer Waschzone eines Druck- oder Vakuumdrehfilters oder
- in einer mindestens einstufigen Rührkesselkaskade mit jeweils nachgeschalteter Entwässerung erfolgt.

Das imprägnierte und ausgewaschene cellulosehältige Material wird zunächst bei Termperaturen, bei denen noch keine merkliche Harnstoffzersetzung auftritt, d.h. bei Temperaturen unter dem Schmelzpunkt des Harnstoffes, bevorzugt unter 100°C, getrocknet.

Das imprägnierte, getrocknete Material wird sodann auf Temperaturen, bei denen Harnstoffzersetzung erfolgt, erhitzt, nämlich mindestens bis zum Schmelzpunkt des Harnstoffes. Es ist auch möglich, die Temperaturführung so zu gestalten, dass Trocknungs- und Erhitzungsprozess ineinander übergehen.

Das erhaltene substituierte Produkt wird in Wasser oder einer anderen geeigneten Flüssigkeit gewaschen, um nicht umgesetzten Harnstoff und Nebenprodukte vom Cellulosecarbamat abzutrennen.

Soll das gewaschene Cellulosecarbamat gelagert werden, wird es getrocknet; wenn es unmittelbar anschliessend in einer gekühlten, verdünnten, wässerigen Base gelöst werden soll, kann es dazu in noch feuchtem Zustand eingesetzt werden.

Die Erfindung wird in folgendem Beispiel noch näher erläutert. Zur Beurteilung der Verarbeitungsqualität von erfindungsgemäss erhaltenen Cellulosecarbamaten gegenüber Cellulosecarbamaten, welche gemäss den Vergleichsbeispielen auf bekannte Weise hergestellt wurden, ist jeweils der Filterwert von mit den jeweiligen Produkten hergestellten Lösungen angegeben. Die Bestimmung der Filterwerte erfolgte nach Sihtola et al., Paperi ja Pun 44 (1962) 5, 295 bis 300, wobei jedoch anstelle von Papierfiltern Stoffilter verwendet wurden.

Beispiel

1 kg eines Buchensulfitzellstoffes mit einem DP von 850 wurde folgender Behandlung unterworfen:
- Imprägnieren mit einer Lösung folgender Zusammensetzung:

| | | |
|---|---|---|
| 4,8 kg | Harnstoff | (20 Massen%) |
| 2,8 kg | Ätznatron | (11,7 Massen%) |
| 16,4 kg | Wasser | (68,3 Massen%) |

während zweier Stunden,
- Abpressen auf einen Trockengehalt von 40 Massen%,
- Zerfasern,
- Reife bei Raumtemperatur zum Abbau des DP auf ca. 350,
- viermaliges Auswaschen mit 20%iger Harnstofflösung,
- Trocknen im Umlufttrockenschrank bei 70°C über Nacht.

Nach dieser Behandlungsstufe hatte das Produkt einen DP von 340, einen Stickstoffgehalt von 11% und einen Natriumgehalt unter 0,1% (als NaOH gerechnet).
- Erhitzen im Vakuumtrockenschrank unter einem Druck von etwa 100 mbar abs. auf 155°C während 2,5 h,
- viermaliges Auswaschen mit Wasser,
- Trocknen.

Nach dieser Behandlungsstufe hatte das Produkt einen DP von 310 und einen Stickstoffgehalt von 2,8%. Es wurde damit eine Lösung folgender Zusammensetzung hergestellt:

7 Massen% Cellulosecarbamat
9 Massen% NaOH
1 Massen% ZnO
83 Massen% Wasser.

Die Temperatur beim Lösevorgang betrug -5°C, die Lösezeit 2 h. Die mikroskopische Untersuchung ergab eine sehr gute Lösung mit nur wenigen Faserresten, ihr Filterwert betrug nur 300. Die Lösung liess sich somit einwandfrei filtrieren.

Vergleichsbeispiel 1

(Herkömmliches Verfahren nach US-A 2 134 825 ohne Auswaschen von Natriumhydroxid)

Mit 1 kg desselben Ausgangszellstoffes wurden unter den gleichen Bedingungen wie im voranstehenden Beispiel folgende drei Schritte durchgeführt:

- Imprägnieren
- Abpressen
- Zerfasern

Die Reife erfolgte gleichzeitig mit der Trocknung im Umlufttrockenschrank bei 70°C über Nacht. Danach hatte das Produkt einen DP von 280, einen Stickstoffgehalt von 11,8% und einen Na-Gehalt von 11,1% (als NaOH gerechnet).
- Temperaturbehandlung im Vakuumtrockenschrank unter einem Druck von etwa 100 mbar abs. bei 115°C während 2,5 h

- viermaliges Auswaschen mit Wasser
- Trocknen.

Nach dieser Behandlungsstufe hatte das Produkt einen DP von 260 und einen Stickstoffgehalt von lediglich 0,12%. Ein Löseversuch gemäss dem voranstehenden Beispiel ergab nur eine unfiltrierbare Fasersuspension. Eine Analyse des Waschwassers ergab, dass praktisch kein Natriumhydroxid mehr vorhanden war, sondern mit den Zersetzungsprodukten des Harnstoffes reagiert hatte. Diese standen daher nicht für die Reaktion mit der Cellulose zur Verfügung, so dass praktisch keine Substitution durch Carbamatgruppen erreicht wurde.

Vergleichsbeispiel 2

(Carbamatbildung wird durch vermehrten Harnstoffeinsatz erzwungen)

Es wird analog zu Vergleichsbeispiel 1 gearbeitet, bei der Imprägnierung wird aber eine Lösung folgender Zusammensetzung pro kg Zellstoff verwendet:

| | | |
|---|---|---|
| 2,25 kg | Ätznatron | (9,38 Massen%) |
| 8,75 kg | Harnstoff | (36,46 Massen%) |
| 13,0 kg | Wasser | (54,17 Massen%) |

Das fertige Produkt hatte einen DP von 240 und einen Stickstoffgehalt von 0,95%. Ein Löseversuch gemäss dem Beispiel ergab eine sehr schlechte Lösung mit vielen Faserresten, der Filterwert lag bei etwa 50000 (in diesem Bereich kann der Filterwert nur mehr mit Schwierigkeiten bestimmt werden).

Vergleichsbeispiel 3

(Imprägnierung mit flüssigem Ammoniak als flüchtigem Quellmittel, beschrieben in WO 83/02278)
- Buchensulfitzellstoff mit einem DP von 850 wurde durch Elektronenbestrahlung auf einen DP von ca. 330 gebracht
- 1 kg dieses Zellstoffes wurde mit einer Lösung folgender Zusammensetzung:
7,5 kg Ammoniak (flüssig)
0,94 kg Harnstoff
bei -35°C während einer halben Stunde imprägniert
- Der Ammoniak wurde abdampfen gelassen und das trockene Produkt fein zerfasert
- Temperaturbehandlung, Waschen und Trocknen wie im Beispiel für das erfindungsgemässe Verfahren.

Nach dieser Behandlungsstufe hatte das Produkt einen DP von 300 und einen Stickstoffgehalt von 2,2%. Der Filterwert einer Lösung gemäss dem Beispiel betrug 700.

Nach dem erfindungsgemässen Verfahren ist

es somit möglich, Cellulosecarbamaten zu erhalten, welche hervorragend filtrierbare, technisch ausgezeichnet verwertbare Lösungen in wässerigen Basen ergeben. Der Filterwert dieser Lösungen ist sogar besser als jener von Lösungen, welche mit nach Vergleichsbeispiel 3 unter Verwendung des giftigen, teuren und nur unter hohem Energieeinsatz wiedergewinnbaren Ammoniaks hergestellten Carbamaten erhalten werden.

**Patentansprüche**

1. Verfahren zur Herstellung von Cellulosecarbamat durch Imprägnieren von cellulosehältigem Material mit einer wässerigen, Alkalimetallhydroxid und Harnstoff enthaltenden Lösung, Erhitzen des imprägnierten cellulosehältigen Materials zur Bildung der Cellulosecarbamate sowie Abtrennen von nicht umgesetztem Harnstoff und Nebenprodukten, dadurch gekennzeichnet, dass das mit Alkalimetallhydroxid und Harnstoff imprägnierte Material vor dem Erhitzen ein- oder mehrmals mit harnstoffhältigem Wasser ausgewaschen wird.

2. Verfahren nach Anspruch 1, dadurch gekennzeichnet, dass zum Auswaschen eine wässerige Harnstofflösung eingesetzt wird, die 10 bis 25 Massen% Harnstoff enthält.

3. Verfahren nach einem oder beiden der Ansprüche 1 und 2, dadurch gekennzeichnet, dass zum Imprägnieren des cellulosehältigen Materials eine Lösung eingesetzt wird, welche mehr als 10 und bis 30 Massen%, vorzugsweise 11 bis 12 Massen% Alkalimetallhydroxid, insbesondere Natriumhydroxid enthält.

4. Verfahren nach wenigstens einem der Ansprüche 1 bis 3, dadurch gekennzeichnet, dass das Auswaschen des imprägnierten Materials bis zu einem Alkalimetallhydroxidgehalt von höchstens 2 Massen%, vorzugsweise höchstens 0,5 Massen% - bezogen auf das getrocknete, imprägnierte Material - durchgeführt wird.

**Claims**

1. A method of producing cellulose carbamates by impregnating cellulose-containing material with an aqueous solution containing alkali metal hydroxide and urea, heating the impregnated cellulose-containing material to form the cellulose carbamates as well as separating non reacted urea and by-products, characterised in that the material impregnated with alkali metal hydroxide and urea is washed with urea-containing water one or several times prior to heating.

2. A method according to claim 1, characterised in that an aqueous urea solution containing 10 to 25% by mass or urea is used for washing.

3. A method according to one or both of claims 1 and 2, characterised in that a solution containing more than 10 and up to 30% by mass, preferably 11 to 12% by mass, of alkali metal hydroxide, in particular sodium hydroxide, is used for impregnating the cellulose-containing material.

4. A method according to at least one of claims 1 to 3, characterised in that washing of the impregnated material is effected to a content of alkali metal hydroxide of 2% by mass at most, preferably 0.5% by mass at most, based on the dried impregnated material.

**Revendications**

1. Procédé de préparation de carbamates de cellulose par imprégnation d'une matière contenant de la cellulose par une solution aqueuse contenant un hydroxyde de métal alcalin et de l'urée, chauffage de la matière contenant de la cellulose et imprégnée pour formation des carbamates de cellulose et séparation de l'urée non convertie et des produits d'accompagnement, caractérisé en ce que, avant chauffage, on lave la matière imprégnée par l'hydroxyde de métal alcalin et l'urée une ou plusieurs fois par de l'eau contenant de l'urée.

2. Procédé selon la revendication 1, caractérisé en ce que l'on utilise pour le lavage une solution aqueuse d'urée contenant de 10 à 25% en poids de cette dernière.

3. Procédé selon l'une des revendications 1 et 2 ou selon les deux, caractérisé en ce que, pour l'imprégnation de la matière contenant de la cellulose, on utilise une solution contenant plus de 10% et jusqu'à 30% en poids, de préférence de 11 à 12% en poids d'une hydroxyde de métal alcalin, en particulier d'hydroxyde de sodium.

4. Procédé selon au moins une des revendications 1 à 3, caractérisé en ce que l'on lave la matière imprégnée jusqu'à une teneur en hydroxyde de métal alcalin de 2% en poids au maximum, de préférence de 0,5% en poids au maximum, par rapport à la matière imprégnée et séchée.